# EUROPEAN PATENT APPLICATION

(11) **EP 2 907 777 A1**
(43) Date of publication of application: **19.08.2015**
(21) Application number: 13851088.8
(22) Date of filing: 25.10.2013
(51) Int. Cl.: B65G 47/86

(54) **CONTAINER HOLDING AND CONVEYING DEVICE**

(30) Priority: 02.11.2012 JP 2012242279
(71) Applicant: Hitachi Zosen Corporation, Osaka-shi, Osaka 559-8559 (JP)
(72) Inventor: OGAWA Satoshi, Osaka-shi, Osaka 559-8559 (JP); KITA Kenzo, Osaka-shi, Osaka 559-8559 (JP)
(74) Representative: Style, Kelda Camilla Karen
(86) International application number: PCT/JP2013/078955
(87) International publication number: WO 2014/069359

(57) **Abstract**

A pair of open/close shafts (30) raised on a container holding part (20) has a pair of driving grip arms (31A) that are opened and closed via the open/close shafts (30), and a pair of floating grip arms (31B) pivotally supported by the open/close shafts (30). A grip spring (39) is connected so as to bias the floating grip arms (31B) in a closing direction that brings the floating grip arms (31B) close to each other. The driving grip arms (31A) each include a closing movement restriction rod (38A) that restricts only a closing movement of the floating grip arms (31B). Thus, a container can be stably held by the driving grip arms (31A) and the floating grip arms (31B) in vertical stages in a simple structure.

## Description

### Technical Field

The present invention relates to a container holding and conveying device that is provided for a feed conveyor, a filling device, a capper machine, a discharge conveyor, and an intermediate conveying device connecting these components in, for example, a liquid filling system. The container holding and conveying device, in particular, stably holds various kinds of containers with different body outside diameters at a vertical position, and thus the container holding and conveying device is suitable for high-speed transportation.

### Background Art

### Background Art

For example, a known container holding device with grip arms in vertical two stages is disclosed in Patent Literature 1. The container holding device is provided to hold straight containers substantially circular in cross section or containers that are substantially circular in cross section with different body outside diameters at vertical positions, for example, containers for liquor, seasonings, and so on.

### Citation List

### Patent Literature

Patent Literature 1: Japanese Patent No. 3211500

### Summary of Invention

### Technical Problem

In Patent Literature 1, the grip arms in the vertical two stages are disposed in container holding parts circumferentially spaced at equal intervals on the outer periphery of a rotator, and two pairs of open/close cam mechanisms are provided to open and close the upper grip arms and the lower grip arms. Thus, the open/close cam mechanism acting as an open/close mechanism of the grip arms has a complicated configuration with an increased weight, leading to problems in high-speed transportation. Moreover, the two pairs of open/close cam mechanisms need to be separately adjusted, leading to difficulty in adjustment.

The present invention has been devised to solve the problem. An object of the present invention is to provide a container holding and conveying device that can stably hold a straight container or a container having different body outside diameters at vertical positions, with grip arms disposed in vertical stages in a simple structure, and can convey the container at high speeds.

### Solution to Problem

In order to solve the problem, an invention of a first aspect is a container holding and conveying device provided on each of container holding parts circumferentially disposed at regular intervals on an outer periphery of a rotary member, the container holding and conveying device capable of conveying a container along a circumferential path after the container is received and held from a feed path,
wherein the container holding part has a pair of open/close shafts in an upright position,
the open/close shafts have pairs of grip arms capable of holding two sides of the container, the grip arms being vertically spaced at predetermined intervals,
the container holding and conveying device includes an open/close mechanism at a predetermined position of the circumferential path, the open/close mechanism pivoting the open/close shafts so as to open and close the grip arms,
the pairs of grip arms include a pair of driving grip arms capable of holding two sides of a small-diameter side of the container, the open/close mechanism opening and closing the driving grip arms with proximal ends fixed to the respective open/close shafts,
the other pairs of grip arms include floating grip arms with proximal ends pivotally supported by the open/close shafts, the floating grip arms being capable of holding the two sides of the container with a diameter equal to or larger than the small-diameter side of the container,
the container holding and conveying device includes a grip bias member that biases the floating grip arms in a closing direction so as to bring the floating grip arms close to each other, and
the driving grip arms have a closing movement restriction member that restricts only a closing movement of the floating grip arms.

An invention of a second aspect is a container holding and conveying device provided on each of container holding parts circumferentially disposed at regular intervals on the outer periphery of a rotary member, the container holding and conveying device capable of conveying a container along a circumferential path after the container is received and held from a feed path,
wherein the container holding part has a pair of open/close shafts in an upright position,
the open/close shafts have at least a pair of arm operating members and pairs of grip arms,
the grip arms include floating grip arms with proximal ends pivotally supported by the open/close shafts, the floating grip arms being capable of holding two sides of the container,
the container holding and conveying device includes a grip bias member that biases the pair of floating grip arms in a closing direction,
the arm operating members include a pair of arm operating levers with proximal ends fixed to the open/close shafts and arm restriction members provided on the respective arm operating levers so as to restrict only a closing movement that brings the floating grip arms close to each other, and
the container holding and conveying device includes an open/close mechanism at a predetermined position of the circumferential path, the open/close mechanism pivoting the open/close shafts so as to open and close the arm opening members.

According to an invention of a third aspect, in the configuration of the first or second aspect, the grip bias member is a closing movement spring connected between the pair of floating grip arms.

According to an invention of a fourth aspect, in the configuration of the first or second aspect, the grip bias member includes: the pair of arm restriction members with proximal ends pivotally supported by the open/close shafts, a closing movement bias member that biases the arm restriction member in the closing direction, and an opening movement restriction member that is provided on the arm restriction member so as to restrict only an opening movement for separating the arm portions of the floating grip arms.

According to an invention of a fifth aspect, in the configuration of one of the first to fourth aspects, the floating grip arm has a floating centering mechanism capable of centering a holding position of the container held by the right and left floating grip arms.

According to an invention of a sixth aspect, in the configuration of the fourth aspect, the arm restriction member has a restriction centering mechanism capable of centering the holding position of the container held by the right and left floating grip arms.

According to an invention of a seventh aspect, in the configuration of one of the first to sixth aspects, the grip arms include arm portions with proximal ends supported by the open/close shafts, a pair of claws supported so as to open and close on the free ends of the arm portions via pivot shafts extended in parallel with the open/close shafts, open/bias members, each biasing the claws in an opening direction so as to separate the claws around the pivot shaft, and closing stoppers, each restricting a closing limit of the claw, the pivot shafts are disposed such that a pin connecting straight line connecting the axes of the pair of pivot shafts is located outside the circumferential path,
the claw has an inner holding surface and an outer holding surface that form a predetermined angle so as to hold the two sides of the container,
the container on the feed path enters between the claws, is held by the four inner and outer holding surfaces of the pair of claws in response to a closing movement of the arm portion, and is moved to a container holding position on the circumferential path from the pin connecting straight line connecting the axes of the pivot shafts; meanwhile, since the arm portions are closed and the pin connecting straight line is located outside the circumferential path, the container is held by the four inner and outer holding surfaces with the two outer holding surfaces approaching each other, and then the container is moved to a pivot axis.

### Advantageous Effects of Invention

According to the invention of the first aspect, the driving grip arms are opened and closed by the open/close mechanism via the open/close shafts so as to hold the small-diameter side of the container, and the closing movement restriction member provided on the driving grip arms restricts an operation of the floating grip arms in a closing direction; meanwhile, the grip bias member biases the floating grip arms in the closing direction. Thus, the floating grip arms can hold the side of the container with a diameter equal to or larger than the small-diameter side of the container. This can reliably hold a container having a constant diameter or a container having different outside diameters at vertical positions. Even the heavy container can be reliably held against a centrifugal force generated in high-speed transportation, allowing smooth transportation of the container with reliability. The floating grip arms are simultaneously operated via the closing movement restriction member, only requiring an adjustment to the driving grip arms. Thus, the grip arms can be easily adjusted.

According to the invention of the second aspect, the arm operating member is pivoted in the closing direction by the open/close mechanism via the open/close shafts, and the closing restriction member of the arm operating member restricts a closing movement of the floating grip arm biased in the closing direction by the action of the grip bias member; meanwhile, the side of the container can be sequentially held from the large-diameter side by the floating grip arms in pairs. This can reliably hold a container having a constant diameter or a container having different outside diameters at vertical positions. Even a heavy container can be reliably held against a centrifugal force generated in high-speed transportation, allowing smooth transportation of the container with reliability. The floating grip arms are simultaneously operated via the closing movement restriction member, only requiring an adjustment to the arm operating member. Thus, the grip arms can be easily adjusted.

According to the invention of the seventh aspect, the container supplied to the circumferential path is received between the claws of the arm portions to be closed, and then the container is held on the four inner and outer holding surfaces of the claws. At this point, the pin connecting straight line connecting the pivot axes of the claws is located outside the circumferential path. Thus, when the container is moved from the pin connecting straight line to the container holding position on the circumferential path, a closing movement of the arm portions further closes the claws. Thus, the container can be held such that the two outer holding surfaces of the four inner and outer holding surfaces approach each other. This configuration can firmly hold the container against a large centrifugal force in high-speed transportation. Furthermore, this holding operation allows another kind of container having a different outside diameter to be held only with an adjustment to the open/close cam without exchanging members for the container.

### Brief Description of Drawings

[FIG. 1] FIG. 1 is a cross-sectional view of the side part of a container holding part according to a first embodiment of a container holding and conveying device of the present invention.
[FIG. 2] FIG. 2 is a cross-sectional view showing the rear part of the container holding part.
[FIG. 3] FIG. 3(a) is a plan view showing a container receiving state of driving grip arms, FIG. 3(b) is a plan view showing a container receiving state of floating grip arms, FIG. 3(c) is a plan view showing an intermediate state between the reception and holding of a container with the driving grip arms, FIG. 3(d) is a plan view showing a container holding state of the driving grip arms, and FIG. 3(e) is a plan view showing a container holding state of the floating grip arms.
[FIG. 4A] FIG. 4A is a plan view showing one of the grip arms.
[FIG. 4B] FIG. 4B is a cross-sectional view showing the side part of one of the grip arms.
[FIG. 4C] FIG. 4C is an exploded perspective view showing one of the grip arms.
[FIG. 5A] FIG. 5A is a plan view showing one of the floating grip arms.
[FIG. 5B] FIG. 5B is a cross-sectional view showing the side part of one of the floating grip arms.
[FIG. 6] FIG. 6 is an overall vertical section of the container holding and conveying device.
[FIG. 7A] FIG. 7A is an overall plan view of a filling system.
[FIG. 7B] FIG. 7B is an enlarged view schematically showing a part of a supplying and conveying device in the filling system.
[FIG. 8] FIG. 8 is a cross-sectional view the side part of a container holding part according to a second embodiment of a container holding and conveying device of the present invention.
[FIG. 9] FIG. 9(a) is a partial cross-sectional view showing a container holding part in side view according to a third embodiment of a container holding and conveying device, and FIG. 9(b) is a partial cross-sectional view showing the container holding part in rear view according to the third embodiment of the container holding and conveying device.
[FIG. 10] FIG. 10(a) is a front view showing the holding positions of a container in the container holding part of the third embodiment, FIG. 10(b) is a cross-sectional view taken along line A-A of FIG. 10 (a), FIG. 10 (c) is a cross-sectional view taken along line B-B of FIG. 10(a), and FIG. 10(d) is a cross-sectional view taken along line C-C of FIG. 10(a).
[FIG. 11] FIG. 11(a) is a partial cross-sectional view showing a container holding part in side view according to a fourth embodiment of a container holding and conveying device, and FIG. 11(b) is a partial cross-sectional view showing the container holding part in rear view according to the fourth embodiment.
[FIG. 12] FIG. 12(a) is a front view showing the holding positions of a container according to the fourth embodiment, FIG. 12(b) is a cross-sectional view taken along line D-D of FIG. 12(a), FIG. 12(c) is a cross-sectional view taken along line E-E of FIG. 12(a), and
FIG. 12(d) is a cross-sectional view taken along line F-F of FIG. 12(a), FIG. 12 (e) is a cross-sectional view taken along line G-G of FIG. 12(a), and FIG. 12(f) shows a modification of the cross-sectional view taken along line D-D of FIG. 12(a).
[FIG. 13A] FIG. 13A is a partial cross-sectional view showing a container holding part in side view according to a fifth embodiment of a container holding and conveying device.
[FIG. 13B] FIG. 13B is a partial cross-sectional view showing the container holding part in rear view according to the fifth embodiment.
[FIG. 14] FIG. 14 (a) is a front view showing the holding positions of a container according to the fifth embodiment of the container holding and conveying device,
FIG. 19(b) is a cross-sectional view taken along line I-I of FIG. 14(a), FIG. 19(c) is a cross-sectional view taken along line J-J of FIG. 14(a), FIG. 14(d) is a cross-sectional view taken along line K-K of FIG. 14(a), and

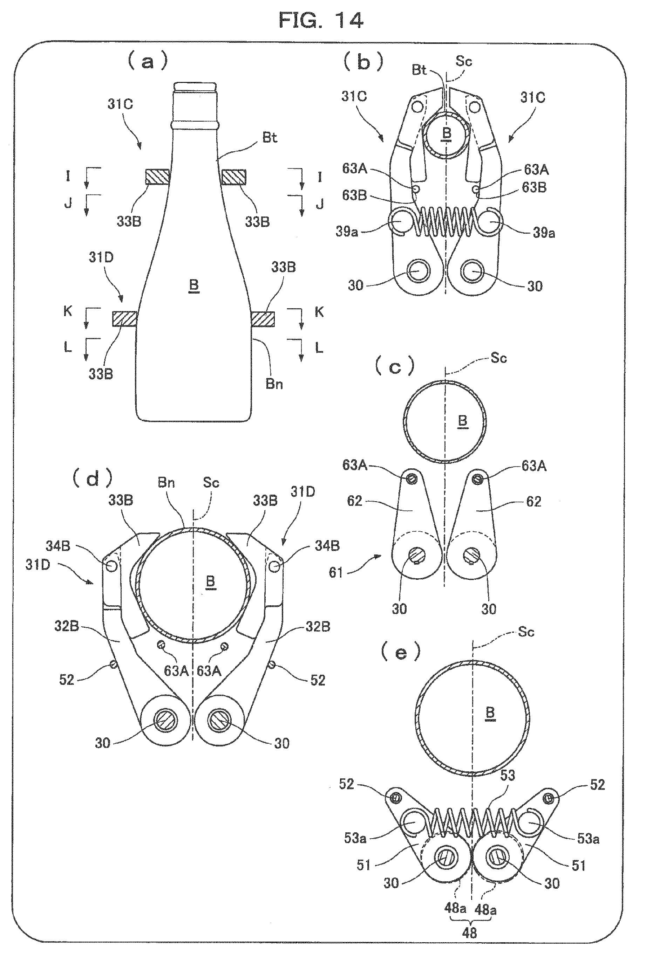

FIG. 14(e) is a cross-sectional view taken along line L-L of FIG. 14(a).

### Description of Embodiments

A container holding and conveying device according to the present invention can hold and convey a straight container substantially circular in cross section or a container substantially circular in cross section along a circumferential path, particularly, a resin, glass, or ceramic container having different body outside diameters in the height direction, for example, containers of beverages such as liquors or seasonings. The container holding and conveying device is applicable to containers of different types (shapes).

### [First Embodiment]

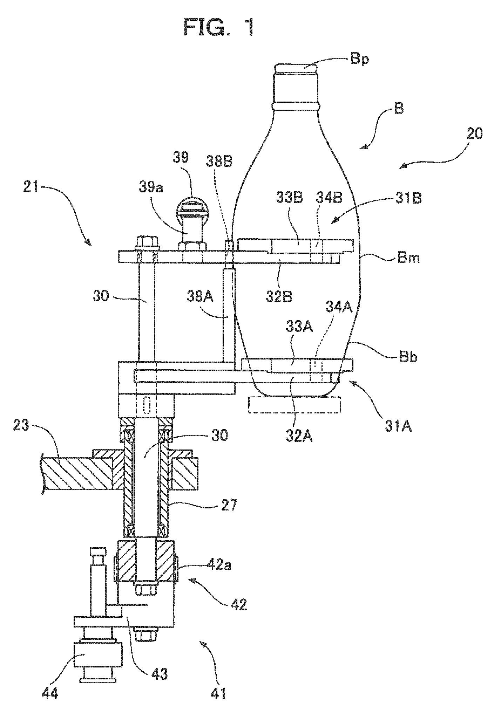

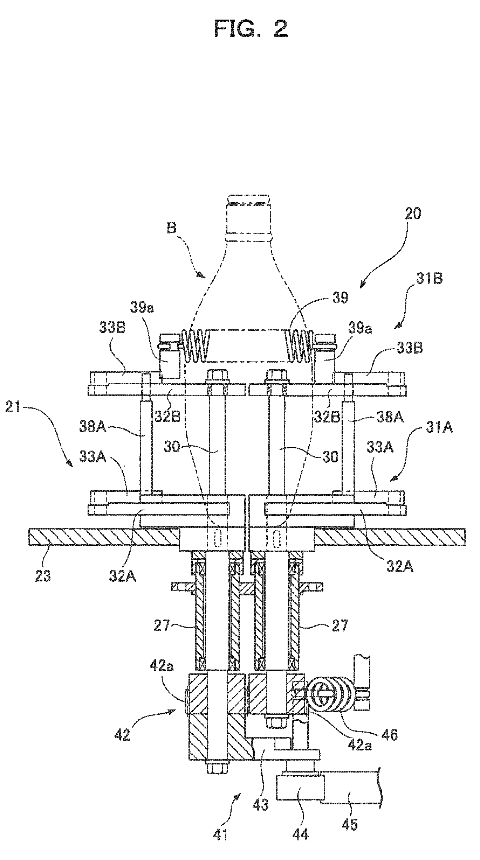

Referring to FIGS. 1 to 7, a first embodiment of the present invention will be described below.

A container holding and conveying device of the first embodiment is a supplying and conveying device 12 provided in a filling system.

### [Filling system]

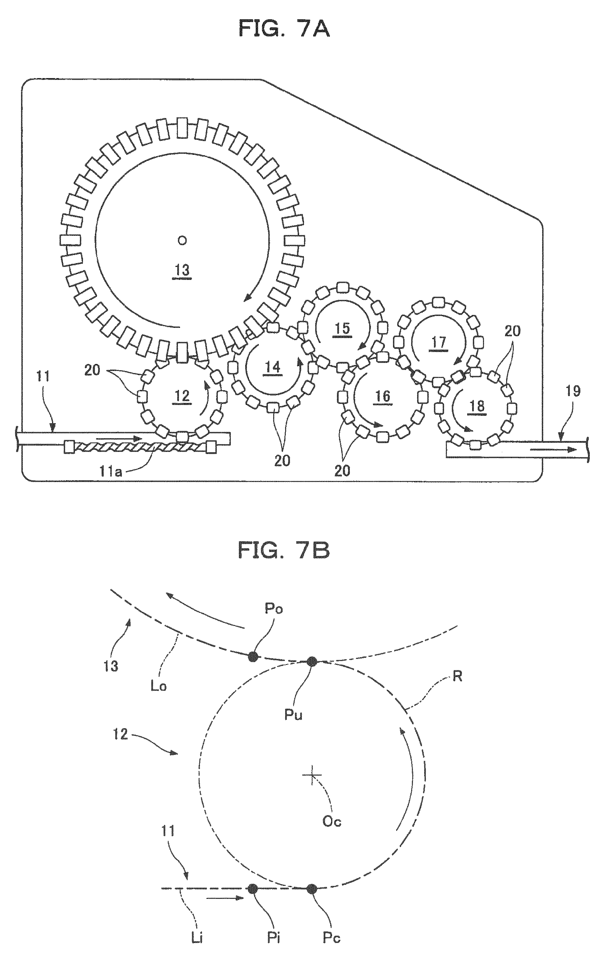

As shown in FIG. 7A, in the filling system, a container B supplied from an entrance conveyor (container feeding device) 11 having a screw shaft 11a for transportation is supplied to a filling device (container discharging device) 13 via the supplying and conveying device 12, and then the container B is filled with a liquid. Subsequently, the container B is supplied from the filling device 13 to a crown capper 15 via a first intermediate conveying device 14 to cap the inlet of the container B. After that, the container B is supplied from the crown capper 15 to a fastening capper 17 via a second intermediate conveying device 16 to fasten the cap of the container B. The container B is then discharged from the fastening capper 17 to an exit conveyor 19 via a discharging and conveying device 18.

The supplying and conveying device 12, the first intermediate conveying device 14, the second intermediate conveying device 16, and the discharging and conveying device 18 are container holding and conveying devices according to the present invention. Since these devices are identical in configuration, only the supplying and conveying device 12 will be described below.

### [Supplying and conveying device]

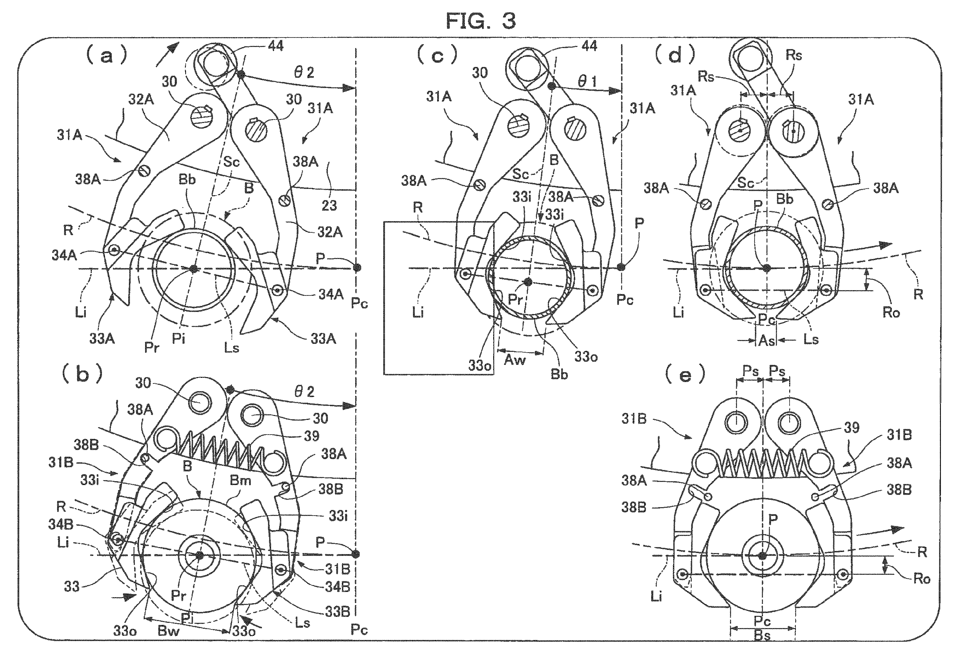

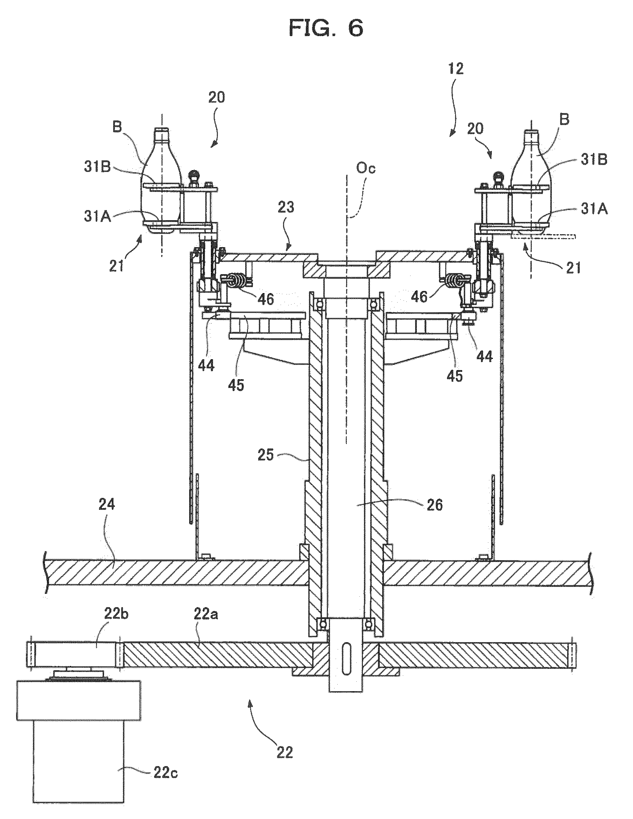

As shown in FIG. 6, the supplying and conveying device 12 has a rotary table (rotating body) 23 that is rotated by a table rotating device 22. Moreover, container holding parts 20 are circumferentially disposed at regular intervals on the outer periphery of the rotary table 23. A container holding device 21 is provided on each of the container holding parts 20. As shown in FIG. 7B, the containers B sequentially fed from a feed path Li of the entrance conveyor 11 via the screw shaft 11a are received by the container holding device 21 at positions indicated in FIGS. 3(a) and 3(b). Subsequently, as shown in FIGS. 3(d) and 3(e), the container B is fed to the container holding device 21 at a container feed position Pi and then is held at a container grip position Pc. The container B is transported along a circumferential path R and then is received at a container discharge position Po by the holding device (not shown) of the filling device 13 while the container holding device 21 is opened from a container release position Pu. In the filling device 13, the container B transported along a filling path Lo is filled with a filing liquid. The grip position and the release position of the container B are properly adjusted according to the shape, size, and transport speed of the container B.

As shown in FIG. 6, the container holding devices 21 have a rotary shaft 26 that is rotatably supported via a bearing on a bearing sleeve 25 raised through a base 24 on a rotation axis Oc. The rotary table 23 serving as a rotating body is mounted on the upper end of the rotary shaft 26. The table rotating device 22 of the rotary table 23 includes an input gear 22a attached to the lower end of the rotary shaft 26, an output gear 22b engaged with the input gear 22a, and a table driving motor 22c that rotates the output gear 22b via a decelerator. The table driving motor 22c rotates the rotary table 23 at a predetermined speed in the direction of an arrow.

In this configuration, as shown in FIG. 1, the container B held and conveyed by the container holding device 21 is, for example, a wine bottle having a body substantially circular in cross section. Specifically, the container B has a bottom tapered portion Bb that gradually increases in diameter from the small-diameter bottom to an intermediate portion, an intermediate large-diameter portion Bm, and a shoulder tapered portion that gradually decreases in diameter from the large-diameter portion Bm to an opening Bp. The bottom tapered portion Bb is held by driving grip arms 31A of the supplying and conveying device 21, which will be described later. Moreover, the large-diameter portion Bm is held by floating grip arms 31B, which will be described later. As a matter of course, the container B is not limited to the wine bottle and thus may be a resin or ceramic container.

### [Container holding part]

A container holding device 10 provided on the container holding part 20 holds and conveys the container without using a star wheel or an outer guide. Two pairs of the upper and lower grip arms 31A and 31B hold the bottom tapered portion Bb and the large-diameter portion Bm of the container B having different body outside diameters at the upper and lower positions.

In other words, as shown in FIG. 7A, the container holding parts 20 are disposed at regular intervals on the rotary table 23 along the circumferential path R centered around the rotation axis Oc. Moreover, as shown in FIGS. 1, 2, 3(d), 3(e), and 7, a pair of open/close shaft sleeves 27 penetrate through the rotary table 23 in parallel with the rotation axis Oc, with a uniform separation distance Rs on a holding axis Sc passing through the container grip position Pc in a radial direction around the rotation axis Oc. The open/close shaft sleeve 27 has a rotatably supported open/close shaft 30. The proximal end of the driving grip arm 31A is fixed on the lower end of the open/close shaft 30 via a key (fixture). The proximal end of the floating grip arm 31B is pivotally supported on the upper end of the open/close shaft 30 via a bearing member.

### (Driving grip arm)

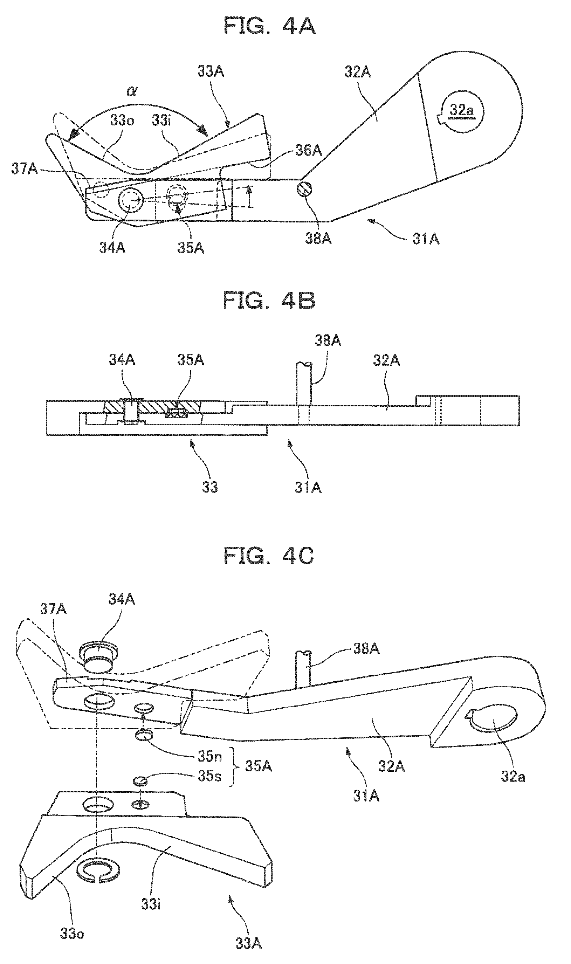

As shown in FIGS. 4A to 4C, the driving grip arm 31A includes a metallic arm portion 32A and a resin claw 33A. The proximal end of the arm portion 32A has a shaft hole 32a fixed to the lower end of the open/close shaft 30 via a key (fixture). The claw 33A is supported so as to open and close on the free end of the arm portion 32A via a pivot pin (pivot shaft) 34A extended in parallel with the open/close shaft 30. Moreover, on the arm portion 32A and the claw 33A, a claw open/bias member 35A is provided to bias the claw 33A around the pivot pin 34A in an opening direction. Furthermore, the claw 33A has a closing stopper 36A that is the closing limit of the claw 33A and an opening stopper 37A that is formed on the arm portion 32A as the opening limit of the claw 33A.

As shown in FIG. 3(d), on the driving grip arm 31A, the pivot pins 34A are disposed such that a pin connecting straight line Ls connecting the axes of the pair of pivot pins 34A is located outside at a predetermined holding distance Ro from the circumferential path R. On the opposing inner surfaces of the claw 33A, a substantially flat inner holding surface 33o and a substantially flat outer holding surface 33i are formed with a predetermined angle α (e.g., 110° to 150°) corresponding to the body outside diameter of the container B such that the holding surfaces can hold the side of the bottom tapered portion Bb of the container B.

The claw open/bias member 35A is composed of a magnet. A magnet storage hole is formed on each of the sliding contact surfaces of the claw 33A and the arm portion 32A that are opposed to each other with the claw 33A disposed in an opening limit position. Moreover, permanent magnet pieces 35n and 35s are fit and fixed into the magnet storage holes such that the opposed surfaces attract each other with reversed polarities.

In this configuration, the magnet storage holes are entirely or substantially entirely aligned with each other at the opening limit of the claw 33. Thus, the permanent magnet pieces 35n and 35s are sucked in a direction that brings the opposed surfaces into full contact with each other, biasing the claw 33 to pivot in a direction that opens the claw 33 around the pivot pin 34A.

In this configuration, the magnet storage holes are formed so as to approach or face each other at the opening limit of the claw 33A and the permanent magnet pieces 35n and 35s are attracted to each other so as to bias the claw 33A to the opening side. The magnet storage holes may be formed so as to separate from each other at the opening limit of the claw 33A and the permanent magnet pieces 35n and 35s may repel each other with the same polarity so as to bias the claw 33A to the opening limit side.

Furthermore, a closing movement restriction rod (closing movement restriction member) 38A extending toward the floating grip arm 31B is raised and fixed in parallel with the open/close shaft 30 at the intermediate position of the arm portion 32A.

### (Floating grip arm)

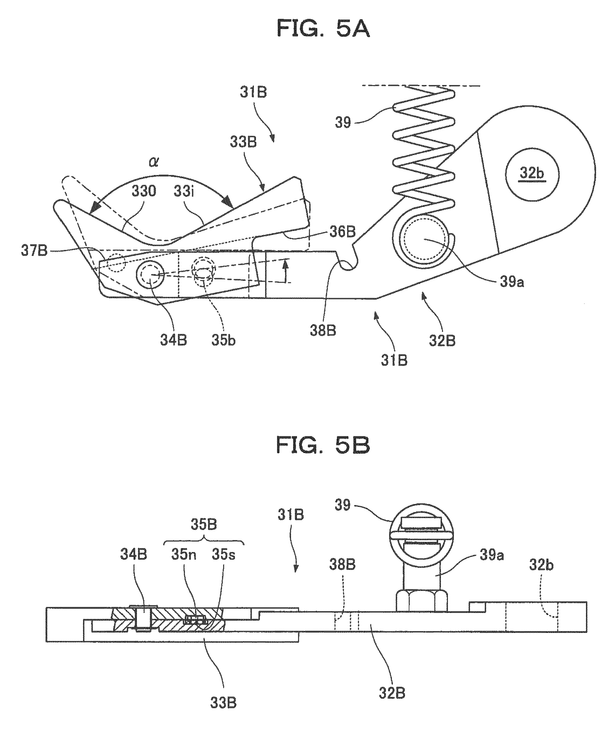

As shown in FIGS. 5A and 5B, the floating grip arm 31B is identical to the driving grip arm 31A as follows: the floating grip arm 31B includes an arm portion 32B whose proximal end is supported by the open/close shaft 30 and a claw 33B supported so as to open and close on the free end of the arm portion 32B via a pivot pin (pivot shaft) 34B extended in parallel with the open/close shaft 30, the floating grip arm 31B further includes a claw open/bias member 35B that biases the claw 33B around the pivot pin 34B in an opening direction, a closing stopper 36B formed on the claw 33B so as to restrict the closing limit of the claw 33B, and a opening stopper 37B formed on the arm portion 32B so as to restrict the opening limit of the claw 33B, the pivot pins 34B are disposed such that the pin connecting straight line Ls connecting the axes of the pair of pivot pins 34B is located outside the circumferential path R, and the claw 33B has the two substantially flat inner and outer holding surfaces 33i and 33o that are formed with the predetermined angle α.

On the contrary, the floating grip arm 31B is different from the driving grip arm 31A in that a) the proximal end of the metallic arm portion 32B has a shaft hole 32b formed where the open/close shaft 30 is pivotally fit, b) the floating grip arm 31B has a rod receiving portion (passive portion) 38B formed where the closing movement restriction rod (closing movement restriction member) 38A is engaged, and c) the floating grip arm 31B has a grip spring (grip biasing member) 39 that biases the pair of arm portions 32B in a closing direction.

Specifically, the floating grip arm 31B includes the metallic arm portion 32B and the resin claw 33B. The shaft hole 32b of the arm portion 32B is rotatably supported on the upper end of the open/close shaft 30 via a bush or a bearing. Moreover, the claw open/bias member 35B provided on the claw 33B and the free end of the arm portion 32B, the closing stopper 36B, and the opening stopper 37B are identical in configuration to those of the driving grip arm 31A.

The rod receiving portion (passive portion) 38B shaped like a long hole having one opening end is formed at the intermediate position of the inner surface of the arm portion 32B. The upper end of the closing movement restriction rod 38A is removably engaged with the rod receiving portion 38B. The grip spring 39 is connected into a connecting pin 39a raised near the proximal end in the intermediate portion of the arm portion 32B.

### (Open/close mechanism)

As shown in FIGS. 1, 2, and 6, an open/close mechanism that opens and closes the driving grip arms 31A and the floating grip arms 31B includes a cam-type arm open/close device 41 that rotates one of the open/close shaft 30, and a gear-type open/close-shaft interlocking mechanism 42 that interlocks one of the open/close shafts 30 with the other open/close shaft pivotally in a relative direction. The arm open/close device 41 includes a cam follower 44 that is attached to the lower end of one of the open/close shafts 30 via an open/close arm 43, an open/close cam 45 that is disposed at a predetermined position of the circumferential path R under the rotary table 23 on the base 24 and is in contact with the cam follower 44, and a cam contact spring 46 that brings the cam follower 44 into contact with the open/close cam 45. The gear-type interlocking mechanism includes interlocking gears 42a that are fixed to and engaged with the pair of open/close shafts 30. In this case, the cam contact spring 46 may be a helical torsion coil spring fit onto one of the open/close shafts 30.

### [Arm and Claw]

In FIGS. 3 (a) and 3(b), when the container B is fed between the claws 33A and 33B along the feed path Li, the container B presses the inner holding surfaces 33i so as to close the claws 33A and 33B. At the container feed position Pi, the container B is held by the claws 33A and 33B via the four holding surfaces: the inner holding surfaces 33i and the outer holding surfaces 33o. Moreover, the arm open/close device 41, the open/close-shaft interlocking mechanism 42, and the grip spring 39 act so as to close the arm portions 32A and 32B of the driving and floating grip arms 31A and 31B. At the container feed position Pi in FIGS. 3(a) to 3(c), the pin connecting straight line Ls is located at the holding distance Ro outside the circumferential path R. When the axis of the container B is moved from a point of application Pr at the intersection of the holding axis Sc and the pin connecting straight line Ls to the container grip position Pc shown in FIGS. 3(d) and 3(e), the arm portions 32A and 32B are closed and the container B is held by the four inner and outer holding surfaces 33i and 33o. In this state, the open distances of the ends of the claws 33A and 33B are reduced from Aw and Bw to Bs such that the outer holding surfaces 33o in a pair come close to each other. With this configuration, at the container grip position Pc, the container B is held so as to cover the bottom tapered portion Bb and the large-diameter portion Bm with the four inner and outer holding surfaces 33i and 33o. Thus, even if the heavy container B filled with a liquid is transported at high speeds along the circumferential path R so as to apply a large centrifugal force, the container B can be stably held. The container B can be transferred from the container release position Pu to the container discharge position Po such that the side of the container B is held by the four inner and outer holding surfaces 33i and 33o. Thus, the container B can be transferred with stability.

### [Reception of the container]

The driving grip arms 31A and the floating grip arms 31B are selected with shapes for different body outside diameters of the container B. The opened arms are pivotally moved from the container discharge position Po to the container feed position Pi along the circumferential path R.

As shown in FIGS. 3 (a) and 3(b), the container B guided to the screw shaft 11a by the entrance conveyor 11 along the feed path Li is fed between the pair of the claws 33A and 33B of the driving and floating grip arms 31A and 31B. Simultaneously, the pair of open/close shafts 30 is pivoted in the relative direction by the open/close cam 45 of the arm open/close device 41 via the cam follower 44 and the interlocking gear 42a, closing the driving grip arms 31A. Moreover, the action of the grip spring 39 closes the floating grip arms 31B via the rod receiving portions 38B in synchronization with the driving grip arms 31A while being restricted by the movements of the closing movement restriction rods 38A. Subsequently, the container B pressed along the feed path Li presses the inner holding surfaces 33i so as to close the claws 33A and 33B.

At the container feed position Pi located at a pivot angle (-θ2) upstream of the container grip position Pc, as shown in FIGS. 3(a) and 3(b), the axis of the container B in the floating grip arms 31B reaches the point of application Pr on the pin connecting straight line Ls connecting the axes of the pivot pins 34B of the floating grip arms 31B. Thus, the outer holding surfaces 33o come into contact with the large-diameter portion Bm, holding the large-diameter portion Bm of the container B on the four inner and outer holding surfaces 33i and 33o. At this point, on the driving grip arms 31A, the bottom tapered portion Bb of the container B is not sufficiently held by the claws 33B.

When the arm portions 32A of the driving grip arms 31A are closed to press the container B rearward, as shown in FIG. 3(c), the bottom tapered portion Bb of the container B is held at four points of the inner and outer holding surfaces 33i and 33o.

Subsequently, the arm portions 32A of the driving grip arms 31A are closed by the arm open/close device 41 and the container B is held by the four inner and outer holding surfaces 33i and 33o. In this state, the container B is pressed rearward along the holding axis Sc; meanwhile, the claws 33B of the floating grip arms 31B are closed with the closed arms 32B.

As shown in FIGS. 3(d) and 3(e), when the axis of the container B reaches the container grip position Pc on the circumferential path R, the claws 33A and 33B of the driving and floating grip arms 31A and 31B reach the closing limits. At the container grip position Pc, the driving and floating grip arms 31A and 31B in vertical two stages hold the large-diameter portion Bm and the bottom tapered portion Bb of the container B with the claws 33A and 33B.

Specifically, the pin connecting straight line Ls connecting the axes of the pivot pins 34A and 34B is located at the holding distance Ro outside the circumferential path R from the container grip position Pc on the circumferential path R. Thus, in a so-called toggle link mechanism including the arm portions 32A and 32B, the pivot pins 34A and 34B, and the claws 33A and 33B, a transition point determined by the angles and positions of the inner and outer holding surfaces 33i and 33o and the positions of the pivot pins is located near the point of application Pr. The axis of the container B moves over the point of application Pr to the inner container grip position Pc, allowing the container B to be firmly held. In this configuration, when the axis of the container B at the container feed position Pi is located at the outer point of application Pr, the ends of the claws 33B have the open distances Aw and Bw that are longer than the open distances As and Bs between the ends of the claws 33B when the axis of the container B is located at the container grip position Pc. This proves that a centrifugal force received by the container B on the circumferential path R can be held with reliability.

The container B is transported from the container grip position Pc along the circumferential path R and approaches the container release position Pu. At this point, the pair of open/close shafts 30 is pivoted by the open/close cam 45 via the cam follower 44 and the interlocking gear 42a in the relative direction. Subsequently, the arm portions 32A of the pair of driving grip arms 31A are opened to engage the closing movement restriction rods 38A into the rod receiving portions 38B. This opens the floating grip arms 31B in synchronization with the driving grip arms 31A. Thus, the container B at the container discharge position Po is transferred from the supplying and conveying device 12 to the filling device 13.

According to the first embodiment, the arm open/close device 41 pivots the open/close shafts 30 via the open/close-shaft interlocking mechanism 42 in the relative direction so as to close the pair of driving grip arms 31A. Subsequently, the closing movement restriction rods 38A provided on the driving grip arms 31A restrict the closing movement of the pair of floating grip arms 31B. Thus, the large-diameter portion Bm of the container B can be first held on the large-diameter side by the floating grip arms 31B, and then the bottom tapered portion Bb can be held on the small-diameter side by the driving grip arms 31A. With this configuration, the container B having different outside diameters at the upper and lower positions can be firmly held at multiple positions. Even the heavy container B can be firmly held against a centrifugal force on the circumferential path R and thus can be smoothly and reliably transported at high speeds.

The arms are opened and closed by the arm open/close device 41 only with the driving grip arms 31A, achieving a simpler structure than in an open/close mechanism that opens and closes a plurality of grip arms. The weight reduction can contribute to speed enhancement.

Moreover, the pin connecting straight line Ls connecting the axes of the pivot pins 34A and 34B is located at the holding distance Ro outside the container grip position Pc on the circumferential path R. With this configuration, the container B is fed to the container grip position Pc over the transition point of a so-called toggle link mechanism and thus the body of the container B can be held on the four inner and outer holding surfaces 33i and 33o of the pairs of claws 33A and 33B. This configuration can transport the heavy container B at high speeds in a firmly held condition.

### [Second Embodiment]

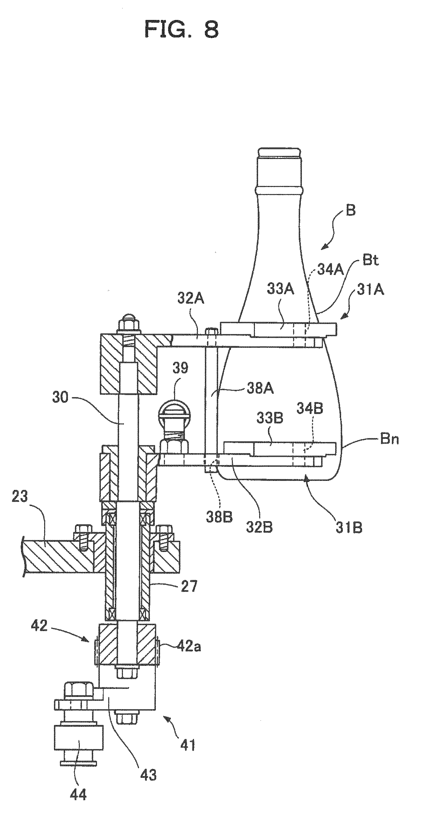

Referring to FIG. 8, a second embodiment of a container holding and conveying device according to the present invention will be described below. The same members as in the first embodiment are indicated by the same reference numerals and the explanation thereof is omitted.

In the first embodiment, the driving grip arms 31A are disposed in the lower stage and the floating grip arms 31B are disposed in the upper stage to hold and transport the container B that has the small-diameter bottom tapered portion Bb near the bottom of the container B and the large-diameter portion Bm in the upper intermediate part of the container B. In the second embodiment, as shown in FIG. 8, driving grip arms 31A are disposed in the upper stage and floating grip arms 31B are disposed in the lower stage to hold and convey a container B that has a bottom large-diameter portion Bn near the bottom of the container B and a neck small-diameter portion Bt in the upper intermediate part of the container B.

Thus, the second embodiment is identical in configuration to the first embodiment except for the layout of the driving and floating grip arms 31A and 31B, achieving the same effect as the first embodiment. For this reason, the explanation of the same configuration is omitted.

In the first and second embodiments, the pair of floating grip arms 31B is provided to hold the large-diameter portion Bm. At least two pairs of floating grip arms may be provided to hold the large-diameter side of the heavy container B filled with a liquid.

### [Third Embodiment]

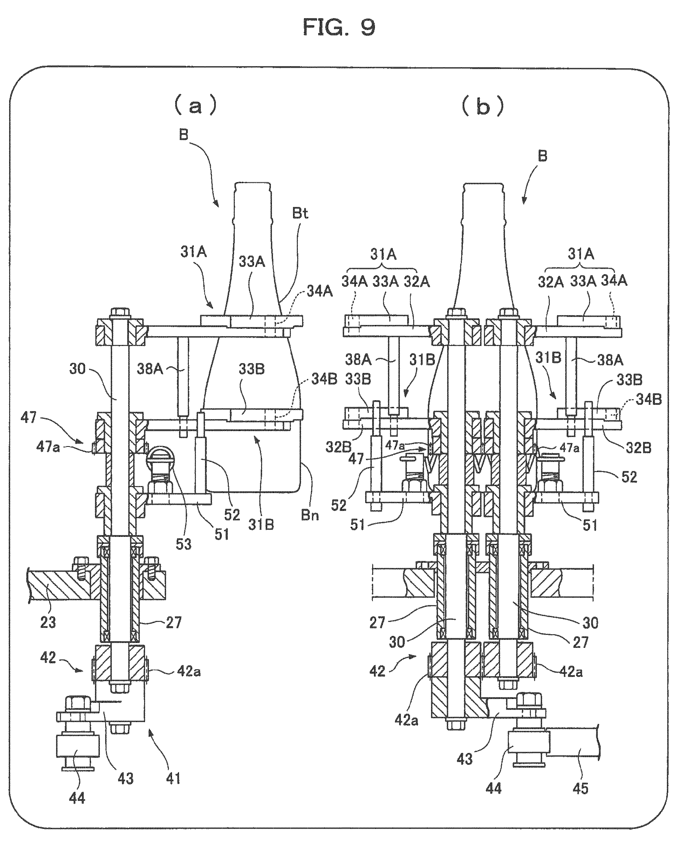

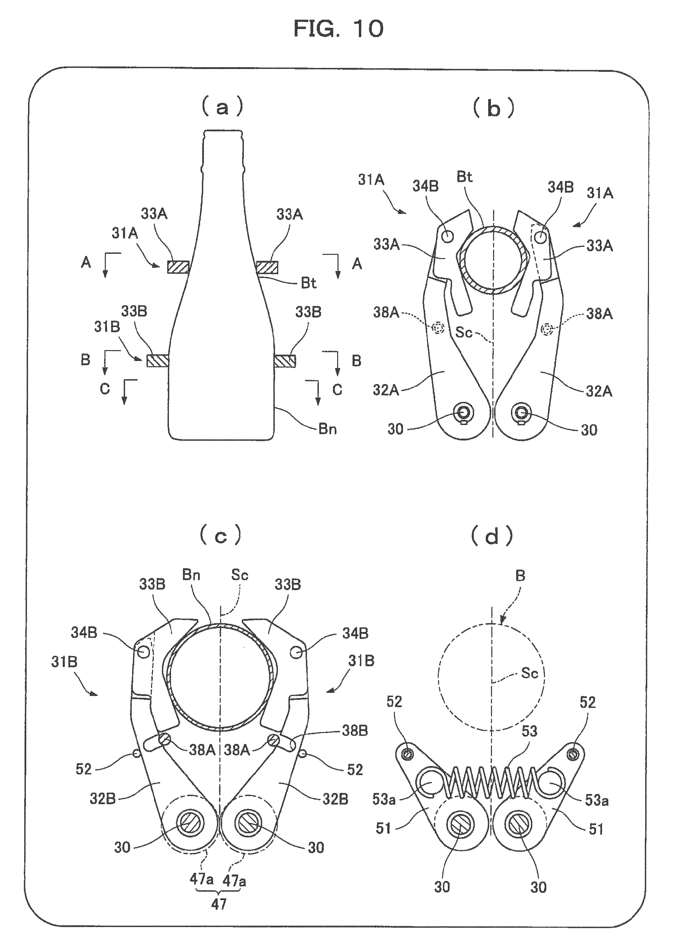

Referring to FIGS. 9 and 10, a third embodiment of a container holding and conveying device according to the present invention will be described below. The same members as in the first and second embodiments are indicated by the same reference numerals and the explanation thereof is omitted.

In the third embodiment, a container B to be handled has a bottom large-diameter portion Bn formed near the bottom of the container B and a neck small-diameter portion Bt in the upper intermediate part of the container B (the bottom large-diameter portion Bn has a smaller diameter than in the second embodiment). In the first embodiment, the grip spring 39 connected between the arms 32B acts as a close/bias member for the floating grip arms 31B. In the third embodiment, grip bias members include an arm restriction lever acting as an arm restriction member, restriction rods (opening movement restriction members) 52 that are provided on arm closing levers (arm restriction members) 51 so as to restrict an opening movement of floating grip arms 31B, and a restriction spring (closing movement bias member) 53 that biases the arm restriction lever 51 in a closing direction.

For the arm restriction lever 51 or the floating grip arm 31B, a floating centering mechanism 47 for holding the container B on a holding axis Sc is provided on the floating grip arm 31B.

The container holding and conveying device includes driving grip arms 31A that hold the neck small-diameter Bt in the upper stage of open/close shafts 30 and the floating grip arms 31B that hold the bottom large-diameter portion Bn in the lower stage of the open/close shafts 30. Furthermore, the pair of arm restriction levers 51 is pivotally provided on the open/close shafts 30 under the floating grip arms 31B via bushes or bearings.

As shown in FIG. 10(d), the arm restriction spring 53 is connected to the intermediate portions of the arm restriction levers 51 via connecting pins 53a, biasing the arm restriction levers 51 in the closing direction. The restriction rods 52 are raised and fixed on the free ends of the arm restriction levers 51. The upper end of the restriction rod 52 is extended to the outside of an arm portion 32B of the floating grip arm 31B so as to restrict the arm portion 32B. The floating centering mechanism 47 has centering gears 47a engaged with each other on the proximal ends of the pair of floating grip arms 31B. Thus, the pair of floating grip arms 31B is held symmetrically about the holding axis Sc and is simultaneously opened and closed in a relative direction so as to hold the container B on the holding axis Sc. The centering gears 47a of the floating centering mechanism 47 may be replaced with a known centering pin/cam mechanism.

According to the third embodiment, the grip spring 39 can be omitted from the floating grip arm 31B in addition to the effect of the first embodiment. The shape and operation of a claw 33B can be more flexible, eliminating the need for considering interference between the grip spring 39 and the container B.

Moreover, the centering mechanism 47 can restrict the floating grip arm 31B to a proper position on the holding axis Sc, thereby improving the holding accuracy of the container B.

The grip spring 39 left on the floating grip arm 31B can increase the grip force of the floating grip arm 31B. Since the floating centering mechanism 47 is provided on the floating grip arms 31B, the restriction rod 52 may be provided only on one of the arm restriction levers 51.

### [Fourth Embodiment]

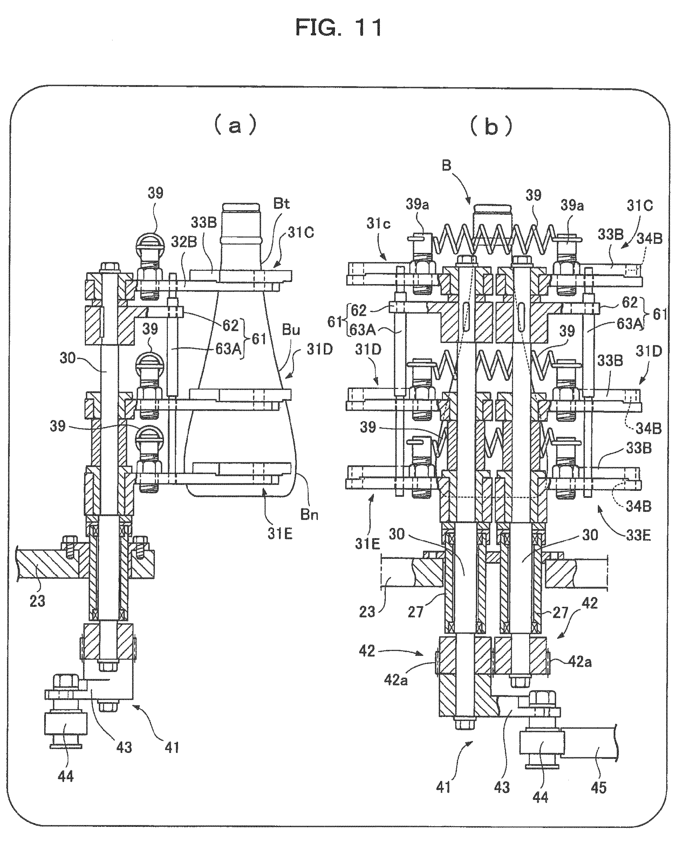

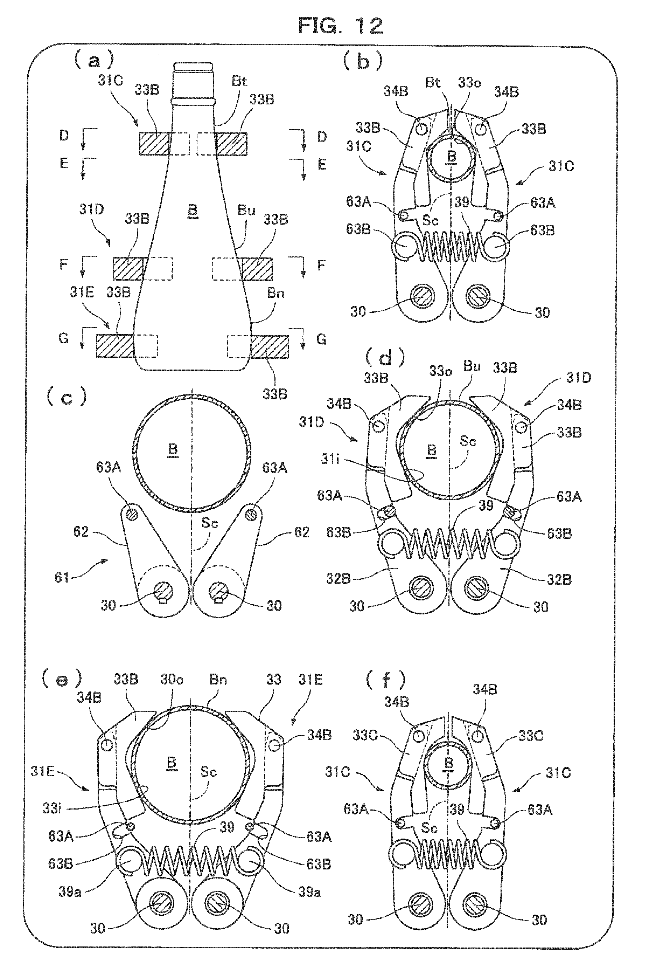

Referring to FIGS. 11 and 12, a fourth embodiment of a container holding and conveying device according to the present invention will be described below. The same members as in the first to third embodiments are indicated by the same reference numerals and the explanation thereof is omitted.

In the fourth embodiment, a container B to be handled has a bottom large-diameter portion Bn formed near the bottom of the container B and a neck small-diameter portion Bt in the upper intermediate part of the container B. In the container holding and conveying device of the fourth embodiment, all grip arms include floating grip arms 31B that are closed and biased by a grip bias member. All the floating grip arms 31B are opened and closed by arm operating members 61. First to third floating grip arms 31C to 31E are identical in structure to the floating grip arm 31B. On a pair of open/close shafts 30, the first floating grip arms 31C that hold the neck small-diameter portion Bt of the container B, the second floating grip arms 31D that hold an intermediate medium-diameter portion Bu, and the third floating grip arms 31E that hold a bottom large-diameter portion Bc are vertically disposed in three stages.

The arm operating member 61 includes an arm operating lever 62 that is pivotally supported on the open/close shaft 30 between the first floating grip arm 31C and the second floating grip arm 31D, an arm restriction rod (arm restriction member) 63A that is hung from the free end of the arm operating lever 62 in parallel with the open/close shaft 30 and extends inside the arms 32B of the first to third floating grip arms 31C to 31E (near a holding axis Sc) so as to restrict only a closing movement, and a rod receiving portion (passive portion) 63B formed on an arm portion 32A.

The first to third floating grip arms 31C to 31E are identical in structure to the floating grip arm 31B of the first embodiment except that claws 33B on the first to third arms 32B each have inner and outer holding surfaces 33i and 33o formed for the neck small-diameter Bt, the intermediate medium diameter Bu, and the bottom large-diameter portion Bc of the container B. The first to third floating grip arms 31C to 31E are closed and biased with a grip spring 39 connected via connecting pins 39a.

### [Container transfer]

The opened first to third floating grip arms 31C to 31E are pivoted and moved from a container release position Pu to a container grip position Pc along a circumferential path R. Subsequently, an entrance conveyor 11 feeds the container B between the first to third floating grip arms 31C to 31E along a feed path L1; meanwhile, an open/close cam 45 pivots the pair of open/close shafts 30 in a relative direction via a cam follower 44 and interlocking gears 42a. Thus, the arm operating levers 62 are pivoted in a closing direction so as to move arm restriction rods 63 in a closing direction. The action of the grip spring 39 pivots the first to third floating grip arms 31C to 31E in the closing direction.

At a container feed position Pi, the first to third floating grip arms 31C to 31E sequentially hold the container B from the large-diameter side. Specifically, the bottom large-diameter portion Bc is first held by the third floating grip arms 31E. Subsequently, the intermediate medium diameter portion Bu is held by the second floating grip arms 31D. The neck small-diameter portion Bt is then held by the first floating grip arms 31C. At the container grip position Pc in a holding operation of the first to third floating grip arms 31C to 31E, the container B is held by the four inner and outer holding surfaces 33i and 33o of the claws 33B like the floating grip arms 31B in the first embodiment.

The container B is released and transferred in a similar manner at the container release position Pu.

According to the fourth embodiment, an arm open/close device 41 pivots a pair of open/close shafts 40 via an open/close-shaft interlocking mechanism 42 in the relative direction, an open/close mechanism closes the arm operating levers 62 via the open/close shafts 40, and a closing movement of the first to third floating grip arms 31C to 31E that are closed and biased by the action of the grip spring 39 is restricted by the closing movement restriction rods 63 of the arm operating levers 62; meanwhile, the neck small-diameter portion Bt, the intermediate medium-diameter portion Bu, and the bottom large-diameter portion Bn on the side of the container B are held by the first to third floating grip arms 31C to 31E, respectively. Thus, the container B having different outside diameters at vertical positions can be reliably held. Even the heavy container B can be reliably held against a centrifugal force generated in high-speed transportation. Hence, the container B can be smoothly transported with reliability.

Moreover, a centering mechanism including a pair of centering gears may be provided between the proximal ends of the first to third floating grip arms 31C to 31E and/or the proximal ends of the arm operating levers 62.

As shown in FIG. 12(f), a claw 33C may have a holding surface formed continuing from an inner flat surface to an outer arc-shaped surface so as to hold the neck small-diameter portion Bt on the two holding surfaces. The second and third floating grip arms 31D and 31E hold the intermediate medium-diameter portion Bu and the bottom large-diameter portion Bn so as to sufficiently firmly hold the container B. Thus, the neck small-diameter portion Bt only requires damping and centering.

### [Fifth Embodiment]

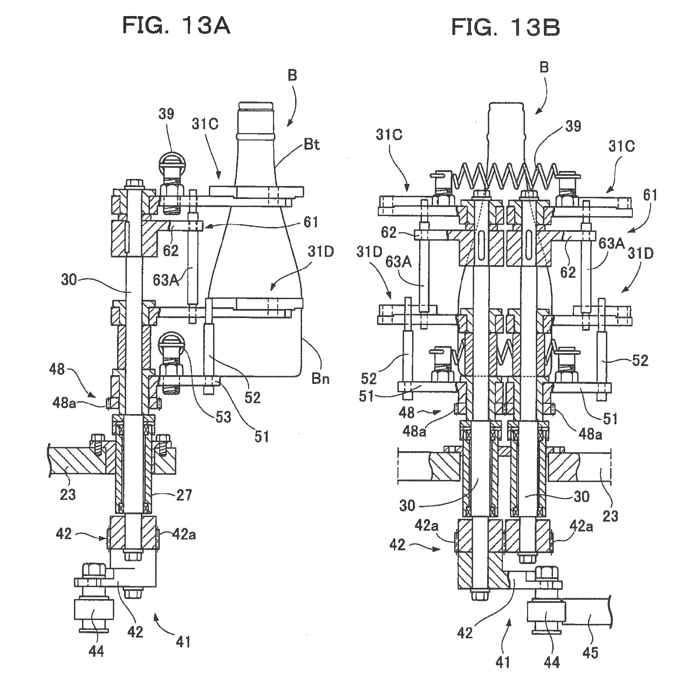

Referring to FIGS. 13 and 14, a fifth embodiment of a container holding and conveying device according to the present invention will be described below. The same members as in the first to fourth embodiments are indicated by the same reference numerals and the explanation thereof is omitted.

In the fifth embodiment, a container B to be handled has a bottom large-diameter portion Bn formed near the bottom of the container B and a neck small-diameter portion Bt in the upper intermediate part of the container B. Of the first to third floating grip arms 31C to 31E opened and closed by the arm operating members 61 according to the fourth embodiment, only the first and second floating grip arms 31C and 31D are provided. In addition to the close/bias member of the second floating grip arm 31D for holding the bottom large-diameter portion Bn, the container holding and conveying device includes arm restriction levers 51, restriction rods 52, and a restriction spring 53 as in the third embodiment. Moreover, a restriction centering mechanism 48 is provided to open or close the pair of arm restriction levers 51 in synchronization with it. The restriction centering mechanism 48 includes centering gears 48a engaged with each other on the proximal ends of the pair of arm restriction levers 51. The centering gears 48a of the restriction centering mechanism 48 may be replaced with a known centering pin/cam mechanism.

According to the fifth embodiment, the second floating grip arms 31D are closed and biased by the restriction spring 53 as well as a grip spring 39 and are kept at a proper position on a holding axis Sc by the restriction centering mechanism 48, accurately and firmly holding the container B.

### Reference Signs List

- Aw, Bw: open distance
- As, Bs: open distance
- B: container
- Li: feed path
- Ls: pin connecting straight line
- Oc: rotation axis
- Pc: container grip position
- Pu: container release position
- R: circumferential path
- Sc: holding axis
- 11: entrance conveyor (container feeding device)
- 12: supplying and conveying device (container holding and conveying device)
- 13: filling device
- 14: first intermediate conveying device (container holding and conveying device)
- 20: container holding part
- 21: container holding device
- 22: table rotating device
- 23: rotary table (rotating body)
- 26: rotary shaft
- 27: open/close shaft sleeve
- 30: open/close shaft
- 31A: driving grip arm
- 31B: floating grip arm
- 31C to 31D: first to third floating grip arms
- 32A, 32B: arm
- 33A, 33B: claw
- 33o: outer holding surface
- 33i: inner holding surface
- 34A, 34B: pivot pin
- 35A, 35B: claw open/bias member
- 36A, 36B: closing stopper
- 37A, 37B: opening stopper
- 38A: closing movement restriction rod (closing movement restriction member)
- 38B: rod receiving portion (passive portion)
- 39: grip spring (grip bias member)
- 41: arm open/close device
- 42: open/close-shaft interlocking mechanism
- 47: floating centering mechanism
- 48: restriction centering mechanism
- 51: arm restriction lever (arm restriction member)
- 52: arm restriction rod (opening movement restriction member)
- 53: restriction spring (closing movement bias member)
- 61: arm operating member
- 62: arm operating lever
- 63A: arm restriction rod (closing movement restriction member)
- 63B: rod receiving member (passive portion) Reference component number list (Reference)
- B: container
- Bb: bottom tapered portion
- Bm: large-diameter portion
- Bp: opening
- Bn: bottom large-diameter portion
- Bt: neck small-diameter portion
- Bu: intermediate medium-diameter portion
- Lo: filling path
- Sc: holding axis
- Li: feed path
- Ls: pin connecting straight line
- Aw, Bw: open distance
- As, Bs: open distance
- Pi: container feed position
- Pc: container grip position
- Pu: container release position
- Po: container discharge position
- Pr: point of application
- R: circumferential path
- Ro: holding distance
- Rs: separation distance
- Oc: rotation axis

## Claims

1. A container holding and conveying device provided on each of container holding parts circumferentially disposed at regular intervals on an outer periphery of a rotary member, the container holding and conveying device capable of conveying a container along a circumferential path after the container is received and held from a feed path,
wherein the container holding part has a pair of open/close shafts in an upright position,
the open/close shafts have pairs of grip arms capable of holding two sides of the container, the grip arms being vertically spaced at predetermined intervals,
the container holding and conveying device includes an open/close mechanism at a predetermined position of the circumferential path, the open/close mechanism pivoting the open/close shafts so as to open and close the grip arms,
the pairs of grip arms include a pair of driving grip arms capable of holding two sides of a small-diameter side of the container, the open/close mechanism opening and closing the driving grip arms with proximal ends fixed to the respective open/close shafts,
the other pairs of grip arms include floating grip arms with proximal ends pivotally supported by the open/close shafts, the floating grip arms being capable of holding the two sides of the container with a diameter equal to or larger than the small-diameter side of the container,
the container holding and conveying device includes a grip bias member that biases the floating grip arms in a closing direction so as to bring the floating grip arms close to each other, and
the driving grip arms have a closing movement restriction member that restricts only a closing movement of the floating grip arms.

2. A container holding and conveying device provided on each of container holding parts circumferentially disposed at regular intervals on an outer periphery of a rotary member, the container holding and conveying device capable of conveying a container along a circumferential path after the container is received and held from a feed path,
wherein the container holding part has a pair of open/close shafts in an upright position,
the open/close shafts have at least a pair of arm operating members and pairs of grip arms,
the grip arms include floating grip arms with proximal ends pivotally supported by the open/close shafts, the floating grip arms being capable of holding two sides of the container,
the container holding and conveying device includes a grip bias member that biases the pair of floating grip arms in a closing direction,
the arm operating members include a pair of arm operating levers with proximal ends fixed to the open/close shafts and arm restriction members provided on the respective arm operating levers so as to restrict only a closing movement that brings the floating grip arms close to each other, and
the container holding and conveying device includes an open/close mechanism at a predetermined position of the circumferential path, the open/close mechanism pivoting the open/close shafts so as to open and close the arm opening members.

3. The container holding and conveying device according to one of claims 1 and 2, wherein the grip bias member is a closing movement spring connected between the pair of floating grip arms.

4. The container holding and conveying device according to one of claims 1 and 2, wherein the grip bias member includes: the pair of arm restriction members with proximal ends pivotally supported by the open/close shafts, a closing movement bias member that biases the arm restriction member in the closing direction, and an opening movement restriction member that is provided on the arm restriction member so as to restrict only an opening movement for separating arm portions of the floating grip arms.

5. The container holding and conveying device according to any one of claims 1 to 4, wherein the floating grip arm has a floating centering mechanism capable of centering a holding position of the container held by the right and left floating grip arms.

6. The container holding and conveying device according to claim 4, wherein the arm restriction member has a restriction centering mechanism capable of centering a holding position of the container held by the right and left floating grip arms.

7. The container holding and conveying device according to any one of claims 1 to 6, wherein the grip arms include arm portions with proximal ends supported by the open/close shafts, a pair of claws supported so as to open and close on free ends of the arm portions via pivot shafts extended in parallel with the open/close shafts, open/bias members, each biasing the claws in an opening direction so as to separate the claws around the pivot shaft, and closing stoppers, each restricting a closing limit of the claw, the pivot shafts are disposed such that a pin connecting straight line connecting axes of the pair of pivot shafts is located outside the circumferential path,
the claw has an inner holding surface and an outer holding surface that form a predetermined angle so as to hold the two sides of the container,
the container on the feed path enters between the claws, is held by the four inner and outer holding surfaces of the pair of claws in response to a closing movement of the arm portion, and is moved to a container holding position on the circumferential path from the pin connecting straight line connecting the axes of the pivot shafts; meanwhile, since the arm portions are closed and the pin connecting straight line is located outside the circumferential path, the container is held by the four inner and outer holding surfaces with the two outer holding surfaces approaching each other, and then the container is moved to a pivot axis.
